# EUROPEAN PATENT APPLICATION

(11) **EP 1 694 036 A1**
(43) Date of publication of application: **23.08.2006**
(21) Application number: 06003533.4
(22) Date of filing: 21.02.2006
(51) Int. Cl.: H04L 29/12, H04Q 7/38

(54) **Method and apparatus for handoff between mobile communication network and wireless local area network**

(30) Priority: 21.02.2005 KR 2005014240
(71) Applicant: Samsung Electronics Co., Ltd., Yeongtong-gu Suwon-si, Gyeonggi-do (KR)
(72) Inventor: Choi, Gyu-Il, Yeongtong-gu Suwon-si Gyeonggi-do (KP)
(74) Representative: Grünecker, Kinkeldey, Stockmair & Schwanhäusser Anwaltssozietät

(57) **Abstract**

A handoff method and apparatus between a mobile communication network and a WLAN are provided. A router routes data traffic from an Internet network to a terminal to a first node of the mobile communication network. The first node determines whether any call set up exists for a data traffic received from the router to the mobile communication network, routes the data traffic to a second node of the mobile communication network or an access router or the WLAN. The access router transmits the data traffic from the first node to the terminal and transmits the data traffic from the terminal to the router. The second node exchanges the data traffics received from the first node with the terminal located in the mobile communication network. A DHCP server supports the terminal such that the terminal can use an IP address previously allocated before handoff even after the handoff.

## Description

### BACKGROUND OF THE INVENTION

### Field of the Invention:

The present invention relates generally to a method and apparatus for coupling (or interworking) between a 3^{rd} generation (3G) mobile communication network and a Wireless Location Area Network (WLAN). In particular, the present invention relates to a method and apparatus for using the same Internet protocol (IP) during handoff between a 3G mobile communication network and a WLAN.

### Description of the Related Art:

Currently, wireless service has become popular. In particular, IEEE 802.11x standard-based WLAN technology provides convenient Internet service to users at a low charge in various places such as hotel, conference hall, airport, restaurant, and the like, while 3G mobile communication network technology, in other words, cellular technology, provides voice and wireless data service to users on a global basis anytime anyplace. In this way, the 3G mobile communication network and the WLAN are developing based on their own service areas.

Compared with the 3G mobile communication network, the WLAN is superior in speed and quality of the Internet service, especially in service charge. However, the WLAN cannot guarantee continuity of the service because it is a Hot Spot-based network. This problem can be solved by coupling the 3G mobile communication network supporting global service areas with the WLAN supporting hot spots.

Generally, a coupling scheme between the 3G mobile communication network and the WLAN is roughly classified into a 'tightly coupled' scheme and a 'loosely coupled' scheme according to coupling points.

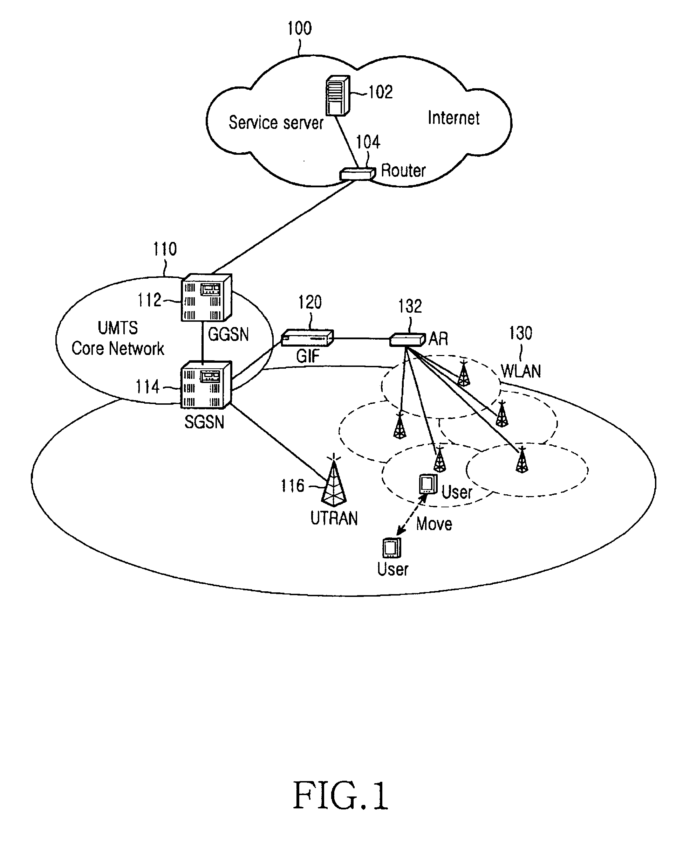

FIG. 1 is a diagram schematically illustrating a conventional 'tightly coupled' scheme.

Referring to FIG. 1, a core network 110 of a 3G mobile communication network comprises a Gateway GPRS (General Packet Radio Service) Support Node (GGSN) 112 connected to a service server 102 of the Internet 100, and a Serving GPRS Support Node (SGSN) 114 connected to a Ultimate Radio Access Network (UTRAN) 116.

A GPRS Inter-working Function (GIF) 120 connects an Access Router (AR) 132 of the WLAN 130 to the SGSN 114, so that traffic of the WLAN 130 passes through the core network 110 of the 3G mobile communication network.

The tightly coupled scheme with the foregoing configuration has a low delay and a low packet loss during handoff. In the tightly coupled scheme, however, the GIF 120 for performing an additional function for coupling between the 3G mobile communication network and the WLAN should be additionally realized between the SGSN 114 and the AR 132, and WLAN traffic should pass through the core network 110 of the 3G mobile communication network.

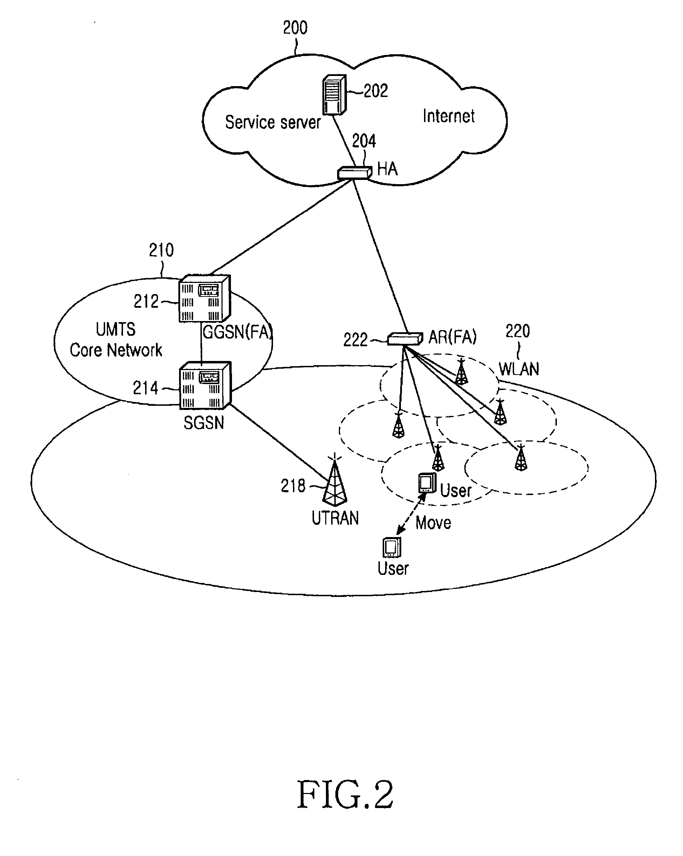

FIG. 2 is a diagram schematically illustrating a conventional 'loosely coupled' scheme.

Referring to FIG. 2, a core network 210 of a 3G mobile communication network comprises an SGSN 214 and also comprises a GGSN 212 connected to a Home Agent (HA) 204 that is connected to a service server 202 of the Internet 200 and manages Foreign Agents (FAs) 212 and 222.

The GGSN 212 comprises an FA function, and serves to interface with an external IP network, i.e., serves to connect a WLAN 220 to the HA 204, so that WLAN traffic does not pass through the core network 210 of the cellular network and generally uses a Mobile IP allocated from the HA 204.

The loosely coupled scheme with the foregoing configuration can couple the 3G mobile communication network to the WLAN regardless of access network technology. However, the loosely coupled scheme has a high delay and a high packet loss during handoff and should use only the Mobile IP for the handoff. In addition, the Mobile IP causes mobility decision delay and signaling transfer delay, and concentrates IP tunnel load on the HA 204.

### SUMMARY OF THE INVENTION

Therefore, an object of the present invention is to provide an apparatus and method for compensating for the defects of the loosely coupled scheme and the tightly couple scheme to enable handoff without any additional structure for coupling (interworking) between the existing 3G mobile communication network and a WLAN.

Another object of the present invention is to provide an apparatus and method for allowing a terminal accessing a 3G mobile communication network (or a terminal accessing a WLAN) to exchange IP packets using an existing IP address after moving to the WLAN (or the 3G mobile communication network).

According to one aspect of the present invention, a method for performing handoff to a wireless local area network (WLAN) by a terminal located in a mobile communication network is provided. The method comprises setting up a call to the mobile communication network, after the call setup, receiving an Internet protocol (IP) address for a service that the terminal desires to receive, the IP address being allocated from a dynamic host configuration protocol (DHCP) server, exchanging data with an Internet network via the mobile communication network using the allocated IP address, determining to perform handoff to the WLAN and performing association with the WLAN, transmitting to the DHCP server a message for requesting continuous use of the IP address allocated from the DHCP server, and receiving an acknowledgement in response to the request message, and releasing the call set up to the mobile communication network, and exchanging data with the Internet network via the WLAN using the IP address.

According to another aspect of the present invention, a method for performing handoff to a mobile communication network by a terminal located in a wireless local area network (WLAN) is provided. The method comprises performing association with the WLAN and receiving an Internet protocol (IP) address for a service that the terminal desires to receive, the IP address being allocated from a dynamic host configuration protocol (DHCP) server, exchanging data traffics with an Internet network via the WLAN using the IP address, determining to perform handoff to the mobile communication network and setting up a call to the mobile communication network, transmitting to the DHCP server a message for requesting continuous use of the IP address allocated from the DHCP server and receiving an acknowledgement in response to the request message, and performing de-association with the WLAN, and exchanging data with the Internet network via the mobile communication network using the IP address.

According to further another aspect of the present invention, an apparatus for supporting handoff' of a terminal between a mobile communication network and a wireless local area network (WLAN) is provided. The apparatus comprises a router connected to a service server of an Internet network, for routing a data traffic to the terminal to the mobile communication network, a first node, which is located in the mobile communication network and connected to the router, for receiving a data traffic to the terminal from the router, determining whether any call set up exists for a data traffic from the router, and routing the data traffic according to the determination result, a second node, which is located in the mobile communication network and connected to the first node, for transmitting a data traffic received from the first node to a terminal located in the mobile communication network, and transmitting a data traffic from the terminal to the Internet network, to the first node, an access router, which is located in the WLAN and connected to the access router and the first node, for transmitting a data traffic received from the first node to a terminal located in the WLAN and transmitting a data traffic from the terminal to the Internet network to the router, and a dynamic host configuration protocol (DHCP) server located in the WLAN, for allocating a flexible Internet protocol (IP) to the terminal, receiving from the terminal a message for requesting continuous use of an IP address previously allocated before handoff even after the handoff and continuously allocating the IP address to the terminal in response to the request message.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram schematically illustrating a conventional 'tightly coupled' scheme for a 3G mobile communication network and a WLAN;
FIG 2 is a diagram schematically illustrating a conventional 'loosely coupled' scheme for a 3G mobile communication network and a WLAN;
FIG. 3 is a diagram illustrating a network configuration for coupling between a 3G mobile communication network and a WLAN according to an exemplary embodiment of the present invention;
FIG. 4 is a traffic flow diagram of a 3G mobile communication network according to an exemplary embodiment of the present invention;
FIG. 5 is a diagram illustrating a traffic flow of a WLAN according to an exemplary embodiment of the present invention;
FIGs. 6A and 6B are ladder diagrams illustrating a handoff procedure from a 3G mobile communication network to a WLAN according to an exemplary embodiment of the present invention; and
FIGs. 7A and 7B are ladder diagrams illustrating a handoff procedure from a WLAN to a 3G mobile communication network according to an exemplary embodiment of the present invention.

Throughout the drawings, like reference numerals will be understood to refer to like parts, components and structures.

### DETAILED DESCRIPTION OF EXEMPLARY EMBODIMENTS

Exemplary embodiments of the present invention will now be described in detail with reference to the accompanying drawings. In the following description, a detailed description of known functions and configurations incorporated herein has been omitted for clarity and conciseness.

The present invention provides an apparatus and method for compensating for the defects of the loosely coupled scheme and the tightly couple scheme to make it possible to use Simple IP during coupling (interworking) between a 3G mobile communication network and a WLAN. Although an exemplary embodiment of the present invention will be described on the assumption that the 3G mobile communication network is a Wideband Code Division Multiple Access (WCDMA) network, an exemplary embodiment of the present invention can also be applied to CDMA and Portable Internet.

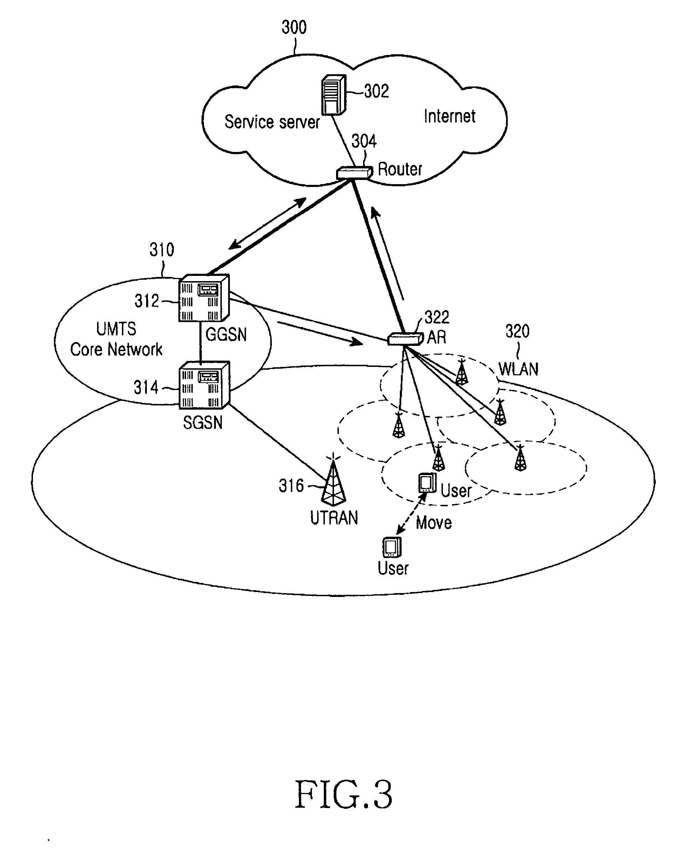

FIG 3 is a diagram illustrating a network configuration for coupling between a 3G mobile communication network and a WLAN according to an exemplary embodiment of the present invention.

Referring to FIG. 3, an Internet network 300 comprises a service server 302 and a router 304 connected to the service server 302, and a core network 310 of a 3G mobile communication network comprises a GGSN 312 and an SGSN 314. The router 304 is connected to the GGSN 312 and an Access Router (AR) 322 of a WLAN 320, and the GGSN 312 and the AR 322 are also connected to each other. A Dynamic Host Configuration Protocol (DHCP) server (not shown) for allocating a flexible IP to a terminal can be included in the AR 322 or can be separately provided.

The router 304 previously sets a routing interval in each of the core network 310 and the WLAN 320, and sets up routing to the GGSN 312 of the core network 3 10 if a destination of the traffic received from the service server 302 is a terminal.

The GGSN 312 sets up routing to the SGSN 314 if a call set up exists in the traffic received from the router 304. However, if no call set up exists in the traffic received from the router 304, the GGSN 312 sets up routing to the AR 322 so that traffics can be directly transmitted to a terminal located in the WLAN 320 without passing through the core network 310.

In a synchronous mobile communication network, a Public Serving Data Node (PSDN) serves as the GGSN 312 and a Packet Control Function (PCF) serves as the SGSN 314.

The AR 322 sets up default routing to the router 304.

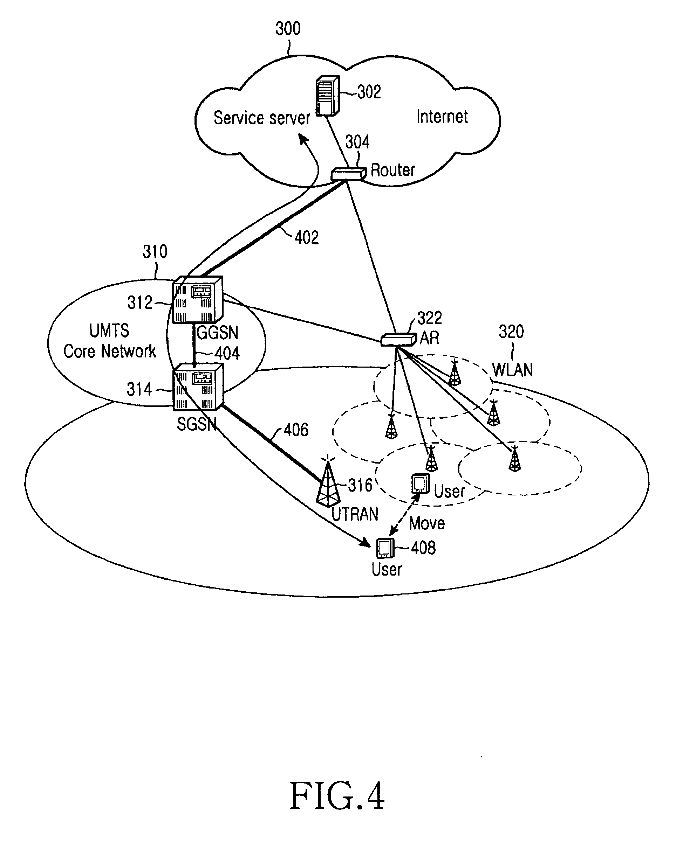

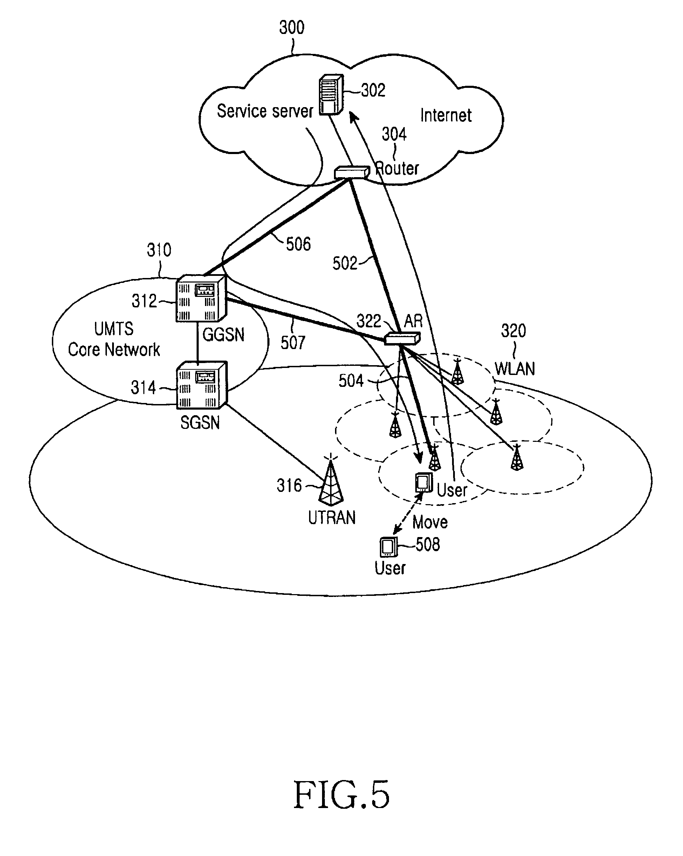

With reference to FIGs. 4 and 5, a flow of traffics of a 3G mobile communication network and a WLAN through the routing set up along the router 304, the GGSN 312 and the AR 322 will be described according to an exemplary embodiment of the present invention.

FIG. 4 is a traffic flow diagram of a 3G mobile communication network according to an exemplary embodiment of the present invention.

Referring to FIG. 4, reference numeral 402 represents a route through which a traffic whose destination is a terminal 408 is delivered from a router 304 to a GGSN 312, and reference numeral 404 represents a route through which a traffic for the terminal 408 to which a call of a 3G mobile communication network is set up, among the traffics delivered to the GGSN 312, is delivered to an SGSN 314. The traffic delivered to the SGSN 314 is transmitted to the terminal 408 located in the 3G mobile communication network in communication with a UTRAN 316 via a route 406.

If the terminal 408 generates a data traffic whose destination is an Internet network 300, the traffic is transmitted to the Internet network 300 via routes 406, 404 and 402.

FIG. 5 is a diagram illustrating a traffic flow of a WLAN according to an exemplary embodiment of the present invention.

Referring to FIG. 5, reference numeral 506 represents a route through which a traffic whose destination is a terminal 508 is delivered from a router 304 to a GGSN 312, and reference numeral 507 represents a route through which a traffic received at the GGSN 312 is transmitted to an AR 322 when the terminal 508 has no call set up to a 3G mobile communication network. The traffic transmitted to the AR 322 is transmitted to the terminal 508 located in a WLAN 320 via a route 504.

If the terminal 508 generates a data traffic whose destination is an Internet network 300, the data traffic is transmitted to the AR 322 via the route 504 and then transmitted to the router 304 via a route 502. Finally, the data traffic is transmitted the Internet network 300. That is, the data traffic generated by the terminal 508 is directly delivered to the Internet network 300 via the AR 322 of the WLAN 320 without passing through a core network 310.

As described with reference to FIGs. 4 and 5, according to an exemplary embodiment of the present invention, the traffic from the Internet network 300 to the 3G mobile communication network is transmitted to the terminal located in the 3G mobile communication network via the GGSN 312 of the core network 310, whereas the traffic from the WLAN 320 to the Internet network 300 can be directly transmitted to the Internet network 300 via the AR 322 of the WLAN 320 without passing through the core network 310.

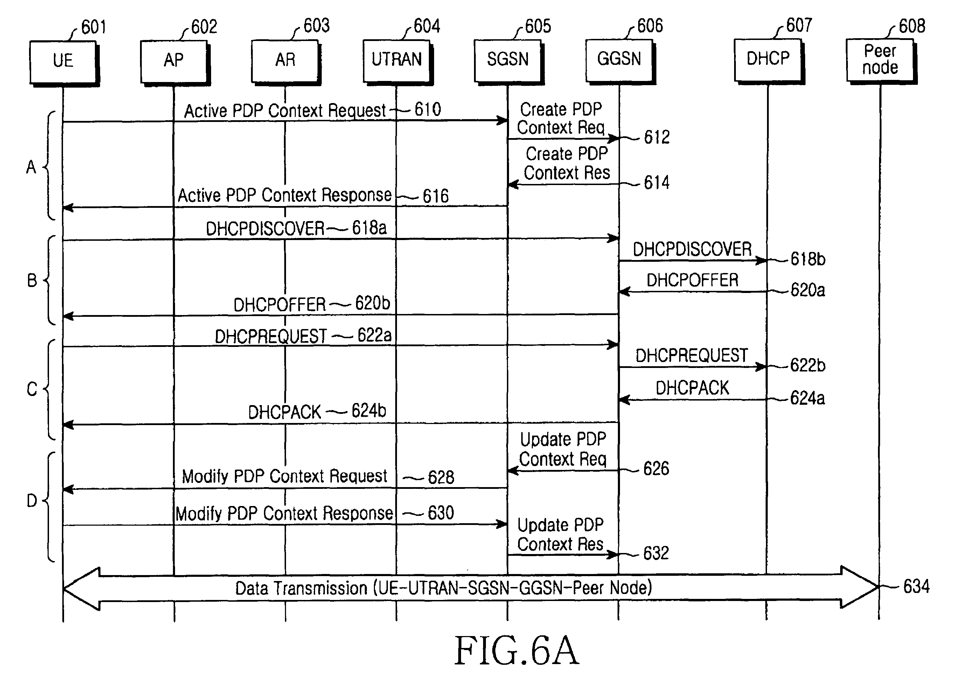

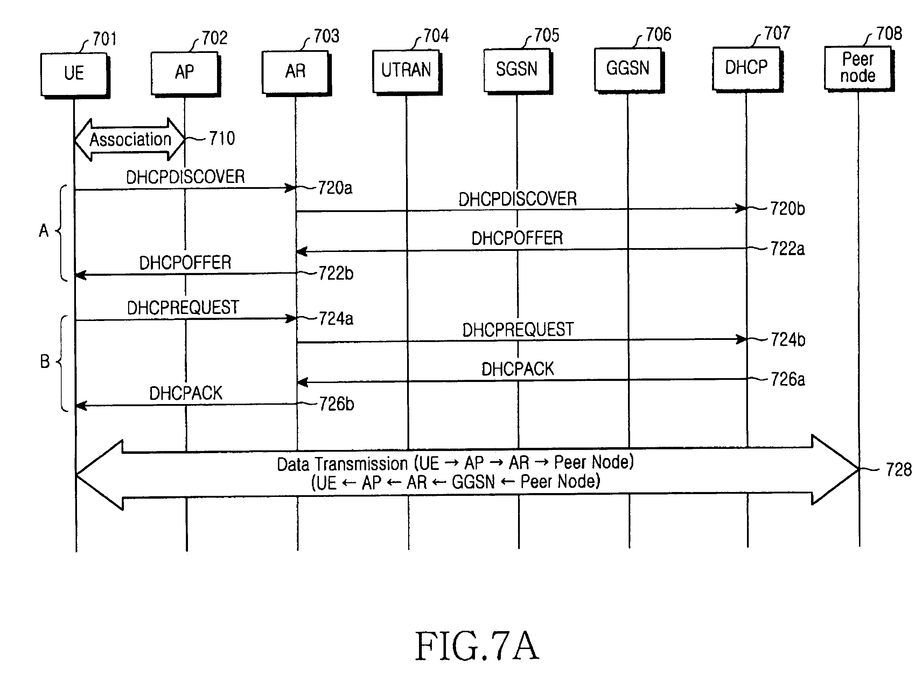

With reference to FIGs. 6A through 7B, a description will now be made of a method for allowing a terminal to use an existing IP even after moving to a 3G mobile communication network or a WLAN according to an exemplary embodiment of the present invention.

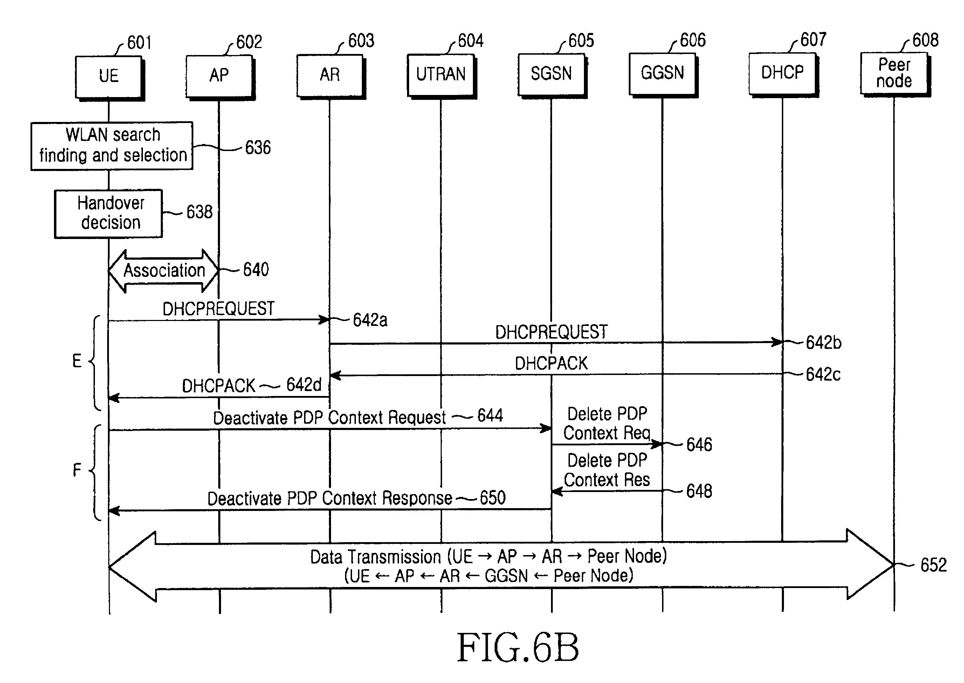

FIGs. 6A and 6B are ladder diagrams illustrating a handoff procedure from a 3G mobile communication network to a WLAN according to an exemplary embodiment of the present invention.

Referring to FIGs. 6A and 6B, in step 610, a user equipment (UE) 601 transmits to an SGSN 605 an 'Active PDP context Request' message including an Access Point Name (APN) corresponding to a service to which it desires to be handed off. The SGSN 605 sets up a call to the APN in a GGSN 606 through a 'Create PDP context Request' message in step 612, and then receives a 'Create PDP context Response' message from the GGSN 606 in step 614. Thereafter, the SGSN 605 transmits an 'Active PDP Context Response' message to the UE 601 in step 616. In this way, the UE 601 sets up a call for the APN (Process A).

If a call is set up through Process A, the UE 601 delivers a DHCPDISCOVER message to a DHCP server 607 via the GGSN 606 in steps 618a and 618b. Upon receiving the DHCPDISCOVER message, the DHCP server 607 transmits a DHCPOFFER message containing an available IP to the UE 601 in steps 620a and 620b (Process B).

Upon receiving the IP through Process B, the UE 601 transmits a DHCPREQUEST message for requesting allocation of the IP to the DHCP server 607 via the GGSN 606 in steps 622a and 622b. Thereafter, the DHCP server 607 transmits a DHCPACK message containing a DHCP option value such as an IP lease time to the UE 601 via the GGSN 606 in steps 624a and 624b (Process C).

If an IP is allocated to the UE 601 through Process C, the GGSN 606 transmits an 'Update PDP Context Request' message to the SGSN 605 in step 626, and the SGSN 605 delivers to the UE 601 a 'Modify PDP Context Request' message indicating the change in IP to the allocated IP in step 628. Upon receiving the 'Modify PDP Context Request' message, the UE 601 transmits a 'Modify PDP Context Response' message to the SGSN 605 in step 630, and the SGSN 605 transmits an 'Update PDP Context Response' message to the GGSN 606 in step 632 (Process D).

After a call is set up through Process A through Process D, the UE 601 can exchange data traffics whose destination is the 3G mobile communication network with a peer node 608 via the GGSN 606, the SGSN 605 and a UTRAN 604.

While exchanging data with the peer node 608, the UE 601 searches for and selects a WLAN to which it will perform handoff in step 636, and determines to perform handoff to the selected WLAN in step 638. The UE 601 performs an association process between the WLAN and an Access Point (AP) 602 in step 640.

After the association process, the UE 601 transmits a DHCPREQUEST message to the DHCP server 607 via an AR 603 in steps 642a and 642b, and receives a DHCPACK message from the DHCP 607 via the AR 603 in steps 642c and 642d. In this case, the UE 601 can maintain the existing IP even after the handoff by transmitting the DHCPREQUEST message with the allocated IP to the DHCP server 607 although it does not transmit the DHCPDISCOVER message as done in steps 618a and 618b (Process E).

If a call setup between the UE 601 and the WLAN is completed in Process E, the UE 601 transmits a 'Deactivate PDP Context Request' message to the SGSN 605 in step 644. Upon receiving the 'Deactivate PDP Context Request' message, the SGSN 605 transmits a 'Delete PDP Context Request' message to the GGSN 606 in step 646 to request call release from the 3G mobile communication network. Then the GGSN 606 releases the call connected to the 3G mobile communication network, and transmits a 'Delete PDP Context Response' message to the SGSN 605 in step 648. Upon receiving the 'Delete PDP Context Response' message, the SGSN 605 transmits a 'Deactivate PDP Context Response' message to the UE 601 in step 650 to notify the call release from the 3G mobile communication network.

Thereafter, in step 652, the data traffics of the UE 601 located in the WLAN are transmitted and received. That is, the data traffic in the direction from the UE 601 to the peer node 608 is directly delivered from the AR 603 to the Internet network, and the data traffic in the direction from the peer node 608 to the UE 601 is delivered from the Internet network to the UE 601 via the GGSN 606, the AR 603 and the AP 602.

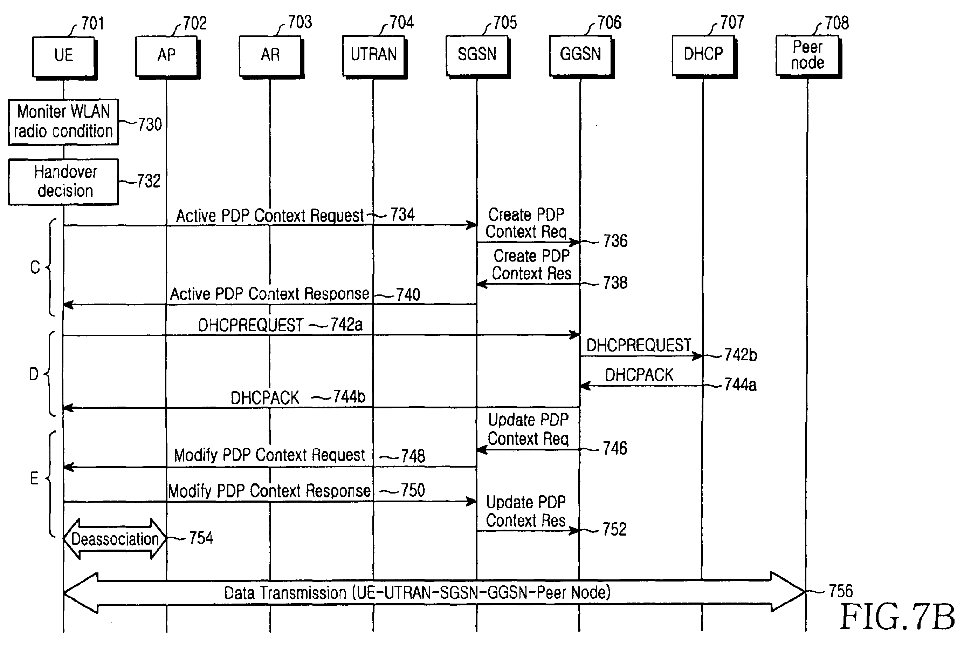

FIGs. 7A and 7B are ladder diagrams illustrating a handoff procedure from a WLAN to a 3G mobile communication network according to an exemplary embodiment of the present invention.

Referring to FIGs. 7A and 7B, a UE 701 performs an association process with an AP 702 in step 710, and delivers a DHCPDISCOVER message to a DHCP server 707 via an AR 703 in steps 720a and 720b. Upon receiving the DHCPDISCOVER message, the DHCP server 707 transmits a DHCPOFFER message to the UE 701 via the AR 703 in steps 722a and 722b (Process A).

Upon receiving an available IP through Process A, the UE 701 transmits a DHCPREQUEST message for requesting allocation of the IP to the DHCP server 707 via the AR 703 in steps 724a and 724b. Then the DHCP server 707 allocates the IP and transmits a DHCPACK message containing a DHCP option value such as an IP lease time to the UE 701 via the AR 703 in steps 726a and 726b (Process B).

Upon receiving the requested IP allocated from the DHCP server 707 through Process B, the UE 701 can exchange data with a peer node 708 in step 728. That is, the data traffic in the direction from the UE 701 to the peer node 708 is directly delivered to an Internet network via the AP 702 and the AR 703, and the data traffic in the direction from the peer node 708 to the UE 701 is delivered from the Internet network to the AR 703 via a GGSN 706.

Thereafter, the UE 701 monitors a radio condition of a WLAN in step 730. If the UE 701 determines to perform handoff to a 3G mobile communication network in step 732, the UE 701 proceeds to Process C to set up a call to a UTRAN 704, an SGSN 705 and the GGSN 706.

In step 734, the UE 701 transmits to the SGSN 705 an 'Active PDP context Request' message including an APN corresponding to a service to which it desires to be handed off. The SGSN 705 sets up a call to the APN in the GGSN 706 through a 'Create PDP context Request' message in step 736, and then receives a 'Create PDP context Response' message from the GGSN 706 in step 738. The SGSN 705 transmits an 'Active PDP Context Response' message to the UE 701 in step 740. In this way, the UE 701 sets up a corresponding call to the APN (Process C).

If the call setup is completed through Process C, the UE 701 transmits a DHCPREQUEST message for requesting allocation of an IP for a service corresponding to the APN to the DHCP server 707 via the GGSN 706 in steps 742a and 742b. In this case, the UE 701 transmits the DHCPREQUEST message with the allocated IP address. Therefore, the DHCP server 707 allows the UE 701 to continuously use the allocated IP address without allocating a new IP although it does not receive the DHCPDISCOVER message from the UE 701 as done in steps 720a and 720b. Thereafter, the DHCP server 707 a DHCPACK message to the UE 701 via the GGSN 706 in steps 744a through 744b (Process D).

If the IP previously allocated to the UE 701 is maintained through Process D, the GGSN 706 transmits an 'Update PDP Context Request' message to the SGSN 705 in step 746, and the SGSN 705 delivers a 'Modify PDP Context Request' message to the UE 701 in step 748 to notify the continuous use of the previously allocated IP. Upon receiving the 'Modify PDP Context Request' message, the UE 701 transmits a 'Modify PDP Context Response' message to the SGSN 705 in step 750, and the SGSN 705 transmits an 'Update PDP Context Response' message to the GGSN 706 in step 752 (Process E).

If the call setup procedure to the 3G mobile communication network is fully completed through Processes C, D and E, the UE 701 performs a de-association (or release) process from the AP 702 in step 754. Thereafter, in step 756, the UE 701 exchanges data traffics with the peer node 708 via UTRAN 704, the SGSN 705 and the GGSN 706.

As can be understood from the foregoing description, the novel scheme for coupling a 3G mobile communication network to a WLAN using Simple IP according to an exemplary embodiment of the present invention can solve the data loss and time delay problems occurring during handoff in the conventional 'loosely coupled' scheme, and can couple the 3G mobile communication network to the WLAN without any additional coupling device and signaling required for implementation of the 'tightly coupled' scheme. In addition, the present invention can obtain the same result in Portable Internet as well as the 3G mobile communication network.

While the invention has been shown and described with reference to a certain exemplary embodiment thereof, it will be understood by those skilled in the art that various changes in form and details may be made therein without departing from the spirit and scope of the invention as defined by the appended claims.

## Claims

1. A method for performing handoff to a wireless local area network (WLAN) by a terminal located in a mobile communication network, the method comprises:
setting up a call to the mobile communication network;
receiving an Internet protocol (IP) address for a service that the terminal desires to receive, the IP address being allocated from a dynamic host configuration protocol (DHCP) server;
exchanging data with an Internet network via the mobile communication network using the allocated IP address;
determining to perform handoff to the WLAN and performing association with the WLAN;
transmitting to the DHCP server a message for requesting continuous use of the IP address allocated from the DHCP server, and receiving an acknowledgement in response to the request message; and
releasing the call set up to the mobile communication network, and exchanging data with the Internet network via the WLAN using the IP address.

2. The method of claim 1, wherein the message for requesting continuous use of the IP address is a DHCP request message, and the terminal transmits the DHCP request message with the IP address to the DHCP server via the WLAN.

3. The method of claim 1, wherein the exchanging data with the Internet network via the WLAN comprises:
transmitting a data traffic to the Internet network via an access router of the WLAN; and
receiving a data traffic from the Internet network via a first node of the mobile communication network and the access router.

4. The method of claim 3, wherein the first node comprises at least one of a gateway GPRS (general packet radio service) supporting node (GGSN) of an asynchronous mobile communication network and a public data serving node (PDSN) of a synchronous mobile communication network.

5. The method of claim 3, wherein the access router comprises at least one of an access router (AR) of the WLAN and an access control router (ACR) of portable Internet.

6. A method for performing handoff to a mobile communication network by a terminal located in a wireless local area network (WLAN), the method comprises:
performing association with the WLAN and receiving an Internet protocol (IP) address for a service that the terminal desires to receive, the IP address being allocated from a dynamic host configuration protocol (DHCP) server;
exchanging data traffics with an Internet network via the WLAN using the IP address;
determining to perform handoff to the mobile communication network and setting up a call to the mobile communication network;
transmitting to the DHCP server a message for requesting continuous use of the IP address allocated from the DHCP server and receiving an acknowledgement in response to the request message; and
performing de-association with the WLAN, and exchanging data with the Internet network via the mobile communication network using the IP address.

7. The method of claim 6, wherein the message for requesting continuous use of the IP address is a DHCP request message, and the terminal transmits the DHCP request message with the IP address to the DHCP server via a first node of the mobile communication network.

8. The method of claim 7, wherein the exchanging data traffics with the Internet network via the WLAN comprises:
transmitting a data traffic to the Internet network via an access router of the WLAN; and
receiving a data traffic from the Internet network via the first node and the access router.

9. The method of claim 8, wherein the first node comprises at least one of a gateway GPRS (general packet radio service) supporting node (GGSN) of an asynchronous mobile communication network and a public data serving node (PDSN) of a synchronous mobile communication network.

10. The method of claim 8, wherein the access router comprises at least one of an access router (AR) of the WLAN and an access control router (ACR) of portable Internet.

11. An apparatus for supporting handoff of a terminal between a mobile communication network and a wireless local area network (WLAN), the apparatus comprises:
a router connected to a service server of an Internet network, for routing a data traffic to the terminal to the mobile communication network;
a first node, which is located in the mobile communication network and connected to the router, for receiving a data traffic to the terminal from the router, determining whether any call set up exists for a data traffic from the router, and routing the data traffic according to the determination result;
a second node, which is located in the mobile communication network and connected to the first node, for transmitting a data traffic received from the first node to a terminal located in the mobile communication network, and transmitting a data traffic from the terminal to the Internet network, to the first node;
an access router, which is located in the WLAN and connected to the access router and the first node, for transmitting a data traffic received from the first node to a terminal located in the WLAN and transmitting a data traffic from the terminal to the Internet network to the router; and
a dynamic host configuration protocol (DHCP) server located in the WLAN, for allocating a flexible Internet protocol (IP) to the terminal, receiving from the terminal a message for requesting continuous use of an IP address previously allocated before handoff even after the handoff and continuously allocating the IP address to the terminal in response to the request message.

12. The apparatus of claim 11, wherein the message for requesting continuous use of the IP address is a DHCP request message, and the terminal transmits the DHCP request message with the IP address previously allocated before handoff to the DHCP server.

13. The apparatus of claim 11, wherein if a call set up exists for the data traffic to the mobile communication network, the first node routs the data traffic to the second node, and if no call set up exists, the first node routes the data traffic to the access router.

14. The apparatus of claim 11, wherein when the terminal located in the mobile communication network performs handoff to the WLAN, the DHCP server receives a message for requesting continuous use of an IP address previously used in the mobile communication network from the terminal via the access router, and transmits an acknowledgement message to the terminal via the access router in response to the request message.

15. The apparatus of claim 11, wherein when the terminal located in the WLAN performs handoff to the mobile communication network, the DHCP server receives a message for requesting continuous use of an IP address previously used in the WLAN from the terminal via the first node, and transmits an acknowledgement to the terminal via the first node in response to the request message.

16. The apparatus of claim 11, wherein the first node comprises at least one of a gateway GPRS (general packet radio service) supporting node (GGSN) of an asynchronous mobile communication network and a public data serving node (PDSN) of a synchronous mobile communication network.

17. The apparatus of claim 11, wherein the second node comprises at least one of a serving GPRS supporting node (SGSN) of an asynchronous mobile communication network and a packet data control (PCF) of a synchronous mobile communication network.

18. The apparatus of claim 11, wherein the access router comprises at least one of an access router (AR) of the WLAN and an access control router (ACR) of portable Internet.
